# EUROPÄISCHE PATENTSCHRIFT

(11) **EP 2 350 505 B1**
(45) Veröffentlichungstag und Bekanntmachung des Hinweises auf die Patenterteilung: **29.04.2015**
(21) Anmeldenummer: 09783722.3
(22) Anmeldetag: 05.10.2009
(51) Int. Cl.: F16K 3/08, F16K 31/53, F01P 7/14

(54) **VENTIL ZUR STEUERUNG VON VOLUMENSTRÖMEN**
VALVE FOR CONTROLLING VOLUME FLOWS
SOUPAPE DE COMMANDE DE DÉBITS VOLUMIQUES

(30) Priorität: 20.10.2008 DE 102008042947
(43) Veröffentlichungstag der Anmeldung: 03.08.2011
(73) Patentinhaber: Robert Bosch GmbH, 70442 Stuttgart (DE)
(72) Erfinder: MOENCH, Jochen, 76547 Sinzheim (DE); HILLS, Alois, 77880 Sasbach (DE); REEB, Georg, 77815 Buehl Eisental (DE); MUSCHELKNAUTZ, Claudius, 77815 Buehl (DE); URLAUB, Sven, 77839 Lichtenau (DE)
(86) Internationale Anmeldenummer: PCT/EP2009/062874
(87) Internationale Veröffentlichungsnummer: WO 2010/046225

(56) Entgegenhaltungen:
- DE-A1-102006 053 311
- DE-C- 877 079
- US-A- 4 432 387
- ROTH K: "EVOLVENTENVERZAHNUNGEN MIT EXTREMEN EIGENSCHAFTEN", ANTRIEBSTECHNIK, VEREINIGTE FACHVERLAGE, MAINZ, DE, vol. 35, no. 7, 1 July 1996 (1996-07-01), pages 43-48, XP000598602, ISSN: 0722-8546

## Beschreibung

### Stand der Technik

Die vorliegende Erfindung betrifft ein Ventil zur Steuerung von Volumenströmen, insbesondere in einem Heiz- und/oder Kühlsystem eines Kraftfahrzeugs, mit einem scheibenförmigen Ventilkörper mit zumindest einer Steueröffnung, der zur Steuerung des Volumenstroms mit einem scheibenförmigen Dichtkörper mit zumindest einer Durchlassöffnung zusammenwirkt, wobei der scheibenförmige Ventilkörper eine Außenverzahnung aufweist, in welche zum Drehen des Ventilkörpers ein Ritzel eingreift.

Aus der DE 10 2006 053 311 A1 ist ein Ventil zur Steuerung von Volumenströmen bekannt, bei dem ein Elektromotor ein Schnecken-Schraubrad-Getriebe antreibt. Das Schnecken-Schraubrad dreht eine Abtriebswelle eines scheibenförmigen Ventilkörpers, die mittig am Ventilkörper angreift. Es liegt somit ein zentraler Antrieb vor, der in Mitte des scheibenförmigen Ventilkörpers angreift. In Absatz 47 auf Seite 6 der Offenlegungsschrift wird alternativ zum Schnecken-Schraubrad-Getriebe vorgeschlagen, dass das Ventil auch eine Scheibe mit einer Außenverzahnung sein könnte, so dass dort ein Ritzel oder eine Schnecke angreifen könnte.

Aus US 4,432,387 A ist ein Ventil zur Steuerung von Volumenströmen mit einem scheibenförmigen Ventilkörper mit zumindest einer Steueröffnung bekannt, wobei der Ventilkörper zur Steuerung des Volumenstroms mit einem scheibenförmigen Dichtkörper mit zumindest einer Durchlassöffnung zusammen wirkt. Der scheibenförmige Ventilkörper weist eine Außenverzahnung auf, in die zum Drehen des Ventilkörpers ein Ritzel eingreift.

Aus Roth K: "Evolventenverzahnungen mit extremen Eigenschaften", Antriebstechnik, Vereinigte Fachverlage, Mainz, DE, Bd. 35, Nr. 7, 1. Juli 1996, Seiten 43 bis 48, XP000598602, ISSN: 0722-8546 sind Evolventenverzahnungen mit extremen Eigenschaften bekannt. In der Veröffentlichung werden Evoloidverzahnungen mit Ritzelzähnezahlen von 1 bis 5 für große Übersetzungen ins Langsame beschrieben.

### Vorteile der Erfindung

Das erfindungsgemäße Ventil zur Steuerung von Volumenströmen hat demgegenüber den Vorteil eines vereinfachten Aufbaus, was mit einer vereinfachten Montage einhergeht sowie eines erhöhten Drehmoments an dem Ventilkörper, welche durch ein höheres Übersetzungsverhältnis erzielbar ist. Überdies liegen eine höhere Stellgenauigkeit zum Verdrehen des Ventilkörpers und ein verbesserter Getriebewirkungsgrad vor.

Durch die erfindungsgemäße Evoloidverzahnung lassen sich vorteilhafterweise große Übersetzungsverhältnisse in einer einzigen Getriebestufe erreichen. Insbesondere ergibt sich eine sehr direkte Kraftübertragung auf den scheibenförmigen Ventilkörper und im Vergleich zu einem Schraubradgetriebe guten Getriebewirkungsgrad. Die Stellgenauigkeit nimmt außerdem zu, da ein Getriebespiel auf größerem Durchmesser zu kleinerem Winkelspiel an der Evoloidverzahnung führt. Von Vorteil ist außerdem, dass insgesamt nur relativ geringe Verzahnungskräfte notwendig sind, da die Krafteinleitung auf großem Durchmesser erfolgt. Es kommt zu einer Erhöhung des Drehmoments durch Realisierung eines höheren Übertragungsverhältnisses bei zugleich erhöhter Stellgenauigkeit. Die Evoloidverzahnung ermöglicht dabei, dass kein Winkelversatz zwischen dem scheibenförmigen Ventilkörper und einer Motorachse eines elektromotorischen Antriebs notwendig ist.

Weitere Vorteile und vorteilhafte Ausgestaltungen der Erfindung ergeben sich aus den Unteransprüchen und der Beschreibung.

Ein einfacher Aufbau des Ventils bei hoher Stellgenauigkeit ergibt sich, wenn die Außenverzahnung des scheibenförmigen Ventilkörpers als Zahnsegment ausgebildet ist. Als vorteilhaft hat sich herausgestellt, wenn die Außenverzahnung am Ventilkörper in Umfangsrichtung einen Bereich von etwa 100 bis 140 Grad umfasst.

Eine einfache Herstellung ist gegeben, wenn die Außenverzahnung umspritzt auf Ventilkörper aufgebracht ist. Ein einfacher Aufbau und gute Dichtwirkung ist gegeben, wenn der scheibenförmige Dichtkörper über zumindest einen umlaufenden Ring an dem scheibenförmigen Ventilkörper dichtend anliegt.

Ein guter Schutz der Verzahnung liegt vor, wenn das Ventil über eine Gehäusehülse verfügt, an welcher innenwandseitig ein Dichtring anliegt, der über eine Dichtlippe an einer dem Dichtkörper abgewandten Seite des scheibenförmigen Ventilkörpers anliegt.

Ein einfacher Aufbau und gute Dichtwirkung ist gegeben, wenn der Dichtkörper an einer einem Stellantrieb des Ventils zugewandten Seite zumindest eine statische Formdichtung aufweist. Es hat sich als vorteilhaft herausgestellt, die zumindest eine Formdichtung als Elastormerdichtung auszubilden.

Ein zuverlässiger Betrieb des Ventils liegt vor, wenn ein Anpressen des Dichtkörpers an den Ventilkörper über die zumindest eine statische Formdichtung und den Dichtring erfolgt.

### Zeichnung

Ein Ausführungsbeispiel der Erfindung ist in der nachfolgenden Beschreibung näher erläutert und anhand der Zeichnung weiter verdeutlicht.

Es zeigen:

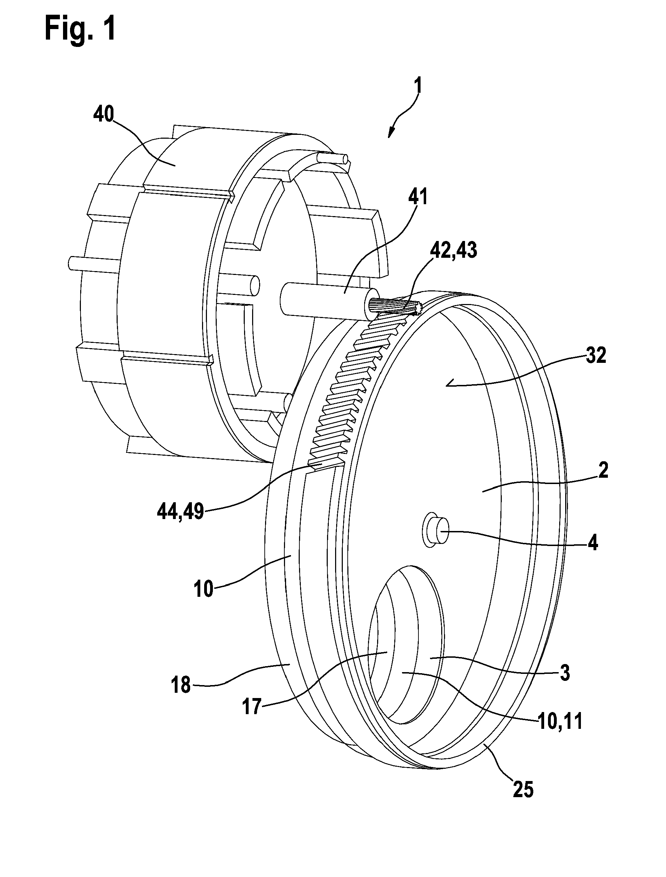

- Fig. 1: ein erfindungsgemäßes Ventil in perspektivischer Ansicht in Blickrichtung auf seinen scheibenförmigen Ventilkörper,
- Fig. 2: das Ventil in perspektivischer Ansicht in Blickrichtung auf seinen scheibenförmigen Dichtkörper,
- Fig. 3: eine Seitenansicht des Ventils mit Blick auf den scheibenförmigen Dichtkörper,
- Fig. 4: einen Schnitt durch das Ventil gemäß einer eingezeichneten Linie IV-IV in Fig. 3 und
- Fig. 5: einen vergrößerten Ausschnitt aus Fig. 4.

### Ausführungsform der Erfindung

Das erfindungsgemäße Ventil 1 ist vorgesehen, um Volumenströme zu steuern, die insbesondere in einem Heiz- und/oder Kühlsystem eines Kraftfahrzeugs vorkommen. Derartige Motorkühlsystem-Regelventile sind auch unter dem Begriff CCV (Coolant Control Valve) bekannt. Sie regeln die Kühlmitteltemperatur in Kühlmittelkreisläufen von Verbrennungskraftmaschinen zwischen einem Kühlerzweig und einem Bypasszweig. Es ist ein Thermomanagement möglich, bei dem die Leistung des Kühlsystems bedarfsgerecht dem Betriebszustand der Verbrennungskraftmaschine angepasst werden kann. So lässt sich zum Beispiel der Kühlwasserstrom in der Warmlaufphase der Verbrennungskraftmaschine vermindern. Durch die rasche Erwärmung sinkt die Motoröl-Viskosität dann schneller, wodurch bei gleichzeitig optimierter Klimaregelung des Innenraums sich der Verbrauch vor allem im Leerlauf und im Teillastbetrieb reduzieren lässt. Durch das Regelventil im Kühlkreislauf kann ein bisher üblicher Thermostat ersetzt werden.

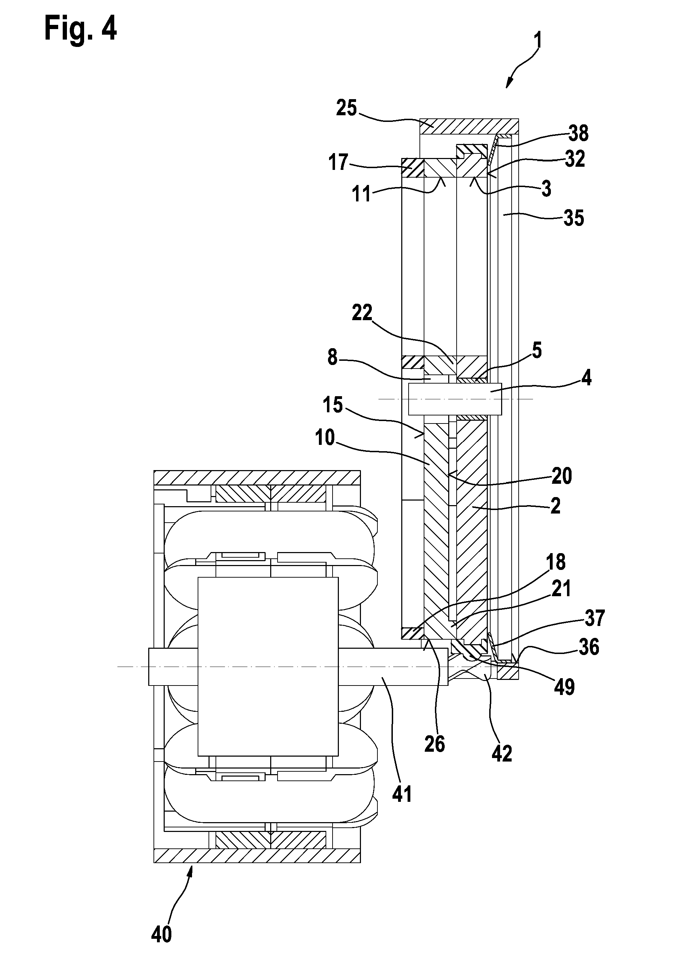

Das Ventil 1, das auch als Drehscheibenventil bezeichnet werden kann, weist einen scheibenförmigen Ventilkörper 2 mit zumindest einer Steueröffnung 3 auf. Den drehbar gestalteten Ventilkörper 2 durchdringt hierzu mittig eine Welle 4, mittels der er beispielsweise über eine in Fig. 4 dargestellte Hülse 5 schwimmend, drehbar um die Welle 4 gelagert ist. An den drehbar gestalteten Ventilkörper 2 liegt ein stehender, etwas durchmesserkleinerer als der Ventilkörper 2 ausgeführter, scheibenförmiger Dichtkörper 10 an, der mittig die Welle 4 zum Beispiel mit einer durchmessergrößeren Durchgangsöffnung 8 mit geringem radialen Abstand umgibt.

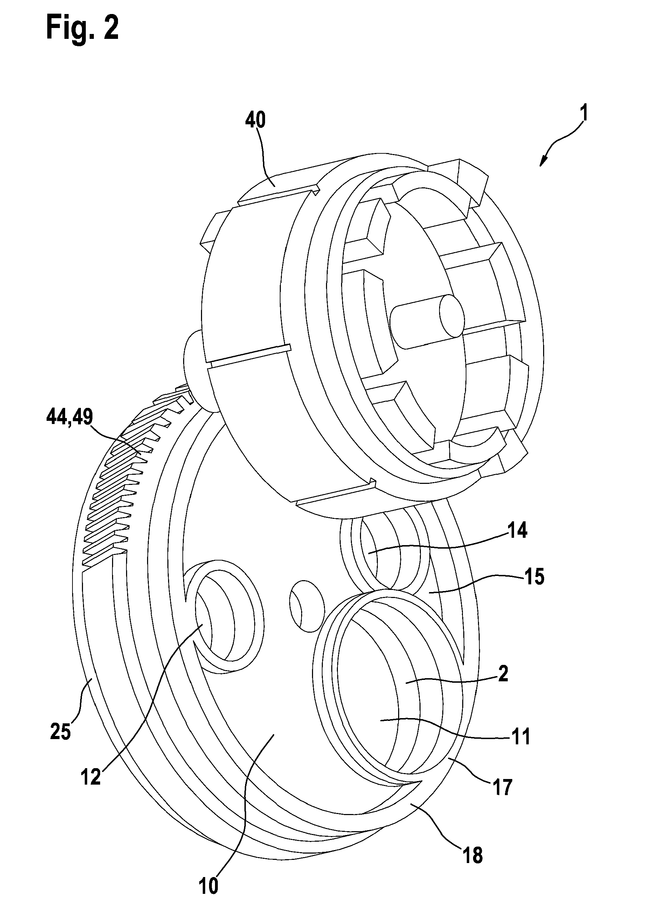

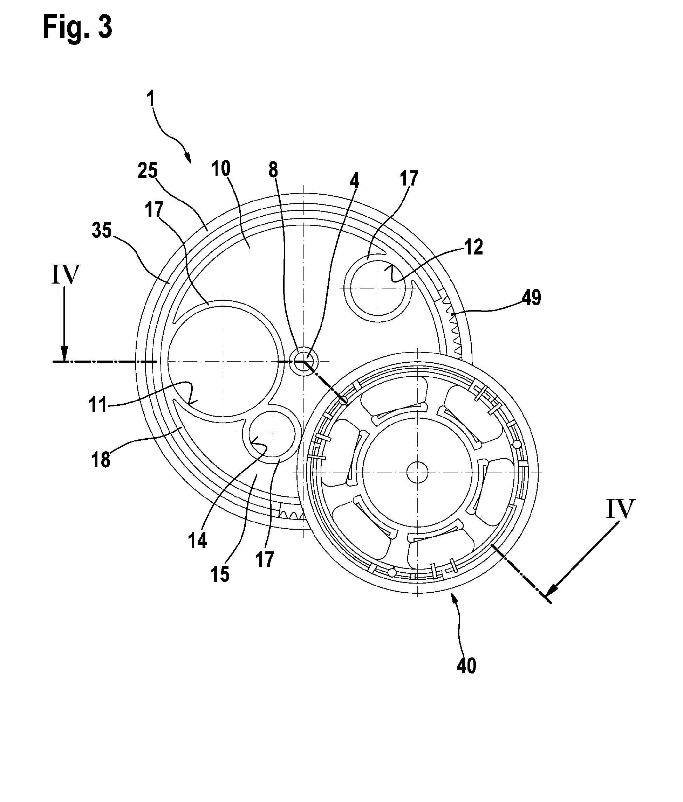

Der Dichtkörper 10 steht fest und ist Teil eines Gehäuses des Ventils 1. Der Dichtkörper 10 verfügt beispielsweise über mehrere, in Fig. 2 und 3 näher dargestellte Durchgangsöffnungen. Im Ausführungsbeispiel ist eine erste, große Durchgangsöffnung 11, eine zweite, mittlere Durchgangsöffnung 12 und eine dritte, kleinere Durchgangsöffnung 14 vorgesehen. Die Durchgangsöffnungen 11, 12, 14 sind an einer dem Ventilkörper 2 abgewandten Seite 15 des Dichtkörpers 10 von statischen Formdichtungen 17 umrandet. Zusätzlich kann auch ein die Seite 15 begrenzender Seitenrand von einer Formdichtung 18 umgeben bzw. umrandet sein. Die Formdichtungen 17, 18 dienen zur Abdichtung beispielsweise beim Anschluss von nicht näher dargestellten Anschlüssen an die Durchgangsöffnungen 11, 12, 14 bzw. eines weiteren Gehäuseteils des Ventils 1, in welchen ein Medium, insbesondere Kühlmittel bzw. Kühlwasser, fließen kann, sobald der Weg von der Steueröffnung 3 des Ventilkörpers 2 entsprechend freigeschaltet worden ist. Je nach Stellung der Steueröffnung 3 zur jeweiligen Durchgangsöffnung 11; 12 oder 14 lässt sich so die tatsächliche Durchflussfläche entsprechend verändern bzw. durch Drehen des Ventilkörpers 2 eine Steuerung des Volumenstroms vornehmen. Der scheibenförmige Ventilkörper 2 kann daher auch als Regelscheibe bezeichnet werden. Die Formdichtungen 17; 18 können als Elastormerdichtung ausgebildet sein.

Das Medium gelangt beispielsweise über einen nicht näher dargestellten Anschlussgehäuseteil, der sich in Fig. 3 rechts einer Gehäusehülse 25 anschließt, zur Steueröffnung 3 und von dort weiter je nach Drehlage des scheibenförmigen Ventilkörpers 2, in eine der Durchgangsöffnungen 11; 12; 14. Die Funktion des Ventils 1 ist das Absperren und Regeln von Kühlwasserströmen, was durch eine rotierende Bewegung des Ventilkörpers 2 gegenüber einem stehenden Dichtkörper 10 erreicht wird. Dadurch werden verschiedene Querschnitte gezielt vergrößert oder verkleinert. In Fig. 2 ist eine vollständige Offenstellung von Steueröffnung 3 und der ersten großen Durchgangsöffnung 11 des Dichtkörpers 10 gezeigt.

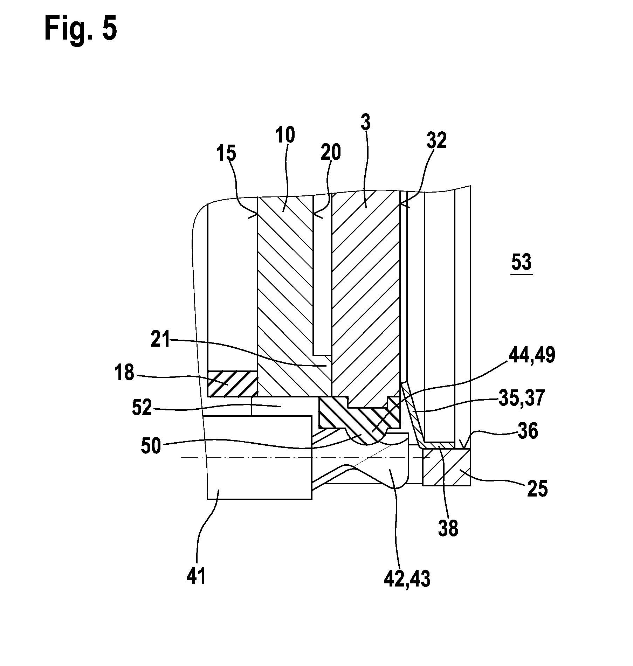

Die Ventilkörper 2 kann flächig an dem scheibenförmigen Dichtkörper 10 anliegen. Der Ventilkörper 2 kann aber auch nichtflächig anliegen, wie die Fig. 4 und 5 näher zeigen, einen axialen Abstand zum Dichtkörper 10 aufweisen. Hierzu ist an einer dem Ventilkörper 2 zugewandten Seite 20 des Dichtkörpers 10 eine umlaufende Erhebung in Form eines Randrings 21 vorgesehen. Der Randring 21 erstreckt sich in radialer Richtung ausgehend von einer Außenfläche 26 des Dichtkörpers 10 etwas radial nach innen und vollständig in Umfangsrichtung. Der Randring 21 umsäumt randseitig somit den Dichtkörper 10 mit seiner Ringbreite nach innen. Außerdem kann in gleicher Weise jeweils ein weiterer Ring 22 um jede Durchgangsöffnung 11; 12; 14 herum vorgesehen sein, welcher die Durchgangsöffnung 11; 12; 14 umfangsseitig umgibt, begrenzt bzw. umsäumt. Eine Anlage beider Körper 2, 10 erfolgt somit nur über die Randringe 21, 22. Der scheibenförmige Dichtkörper 10 kann auch als Dichtscheibe bezeichnet werden.

Zum Antrieb des Ventilkörpers 2 weist das Ventil 1 einen elektromotorischen Stellantrieb 40 auf, der zum Beispiel über eine Antriebswelle 41 ein Ritzel 42 antreibt. Bei dem elektromotorischen Stellantrieb 40 kann es sich um einen Schrittmotor oder dergleichen handeln. Das Ritzel 42 wiederum greift mit seinen Zähnen in eine Außenverzahnung 49 des Ventilkörpers 2 ein. Erfindungsgemäß wirken das Ritzel 42 und die Außenverzahnung 49 des scheibenförmigen Ventilkörpers 2 über eine Evoloidverzahnung 43, 44 miteinander zusammen. Sowohl das Ritzel 42 wie auch die Außenverzahnung 49 sind als Evoloidverzahnung 43 bzw. 44 ausgebildet und bilden ein Getriebe. Die Evoloidverzahnung 43, 44 ist eine spezielle Variante der Evolventenverzahnung und schafft eine kontinuierliche Eingriffsverzahnung, insbesondere selbst dann, wenn das Ritzel 42 nur wenige Zähne aufweisen soll. Im Ausführungsbeispiel hat das Ritzel 42 beispielsweise drei Zähne. Möglich sind auch weniger Zähne, zum Beispiel nur ein einziger Zahn. Damit ist es möglich, große Übersetzungsverhältnisse in einer einzigen Getriebestufe zu erreichen. Insbesondere ergibt sich eine sehr direkte Kraftübertragung auf den scheibenförmigen Ventilkörper 2 und guter Getriebewirkungsgrad. Die Stellgenauigkeit nimmt außerdem zu, da ein Getriebespiel auf größerem Durchmesser zu kleinerem Winkelspiel an der Evoloidverzahnung 43, 44 führt.

Von Vorteil ist außerdem, dass insgesamt nur relativ geringe Verzahnungskräfte notwendig sind, da die Krafteinleitung auf relativ großen Durchmesser erfolgt. Vorteilhafterweise ist es ausreichend, wenn die Außenverzahnung 49 des scheibenförmigen Ventilkörpers 2 als Zahnsegment ausgebildet ist und nur einen Teil des Umfangs des Ventilkörpers 2 umfasst. Dabei kann das Zahnsegment bzw. die Außenverzahnung 49 des scheibenförmigen Ventilkörpers 2 in Umfangsrichtung etwa 100 bis 140 Grad umfassen. Die Außenverzahnung 49 lässt sich in einfacher Art und Weise umspritzt auf Ventilkörper 2 aufbringen. Prinzipiell denkbar ist auch ein Getriebe, bei dem die notwendige Sprungüberdeckung durch mehrere versetzte geradverzahnte Zahnräder erreicht werden kann.

Wie die Fig. 4 zeigt, umgibt die Gehäusehülse 25 sowohl radial als auch axial den Ventilkörper 2 und auch den Dichtkörper 10. Lediglich die Außenverzahnung 49 am Ventilkörper 2 bleibt beispielsweise ausgespart. Rechts des Ventilkörpers 2 bzw. an einer dem Stellantrieb 40 des Ventilkörpers 2 abwandten Seite 32 des Ventilkörpers 2 ist ein umlaufender Dichtring 35 vorgesehen, der sich einerseits mit einer Dichtlippe 37 an der Seite 32 des Ventilkörpers 2 abstützt und andererseits mit einem hülsenförmigen Teil 38 an einer Innenfläche 36 der Gehäusehülse 25 anliegt. Der hülsenförmige Teil 38 und die Dichtlippe 37 des Dichtrings 35 bilden im Schnitt die Form eines L. Zur Kapselung eines Verzahnungsraums 50 von Ritzel 42 und Außenverzahnung 49 kann ein Antriebsraum 52 gegenüber einem restlichen Innenraum 53 des Ventils 1 mittels des Dichtrings 35 bzw. seiner Dichtlippe 37 und dem Randring 21 des Dichtkörpers 10 getrennt werden. Diese Dichtstelle verlangt keine 100-prozentige Dichtigkeit. Aufgabe ist es vielmehr, das Eindringen von größeren Fremdkörpern, wie zum Beispiel Formsand in den Verzahnungsraum 50, zu vermeiden. Eine Anpressung von Dichtkörper 10 an den Ventilkörper 2 kann zum Beispiel über den Dichtring 35 und die Formdichtungen 17, 18 erfolgen, um so eine gute Dichtwirkung erzielen zu können. Der Dichtring 35 mit seiner Dichtlippe 37 dient zur Kapselung des Verzahnungsraums.

Das erfindungsgemäße Ventil ist zum Steuern von Volumenströmen, insbesondere in einem Heiz- und/oder Kühlsystem eines Kraftfahrzeugs, vorgesehen.

## Patentansprüche

1. Ventil zur Steuerung von Volumenströmen, insbesondere in einem Heiz- und/oder Kühlsystem eines Kraftfahrzeugs, mit einem scheibenförmigen Ventilkörper mit zumindest einer Steueröffnung, der zur Steuerung des Volumenstroms mit einem scheibenförmigen Dichtkörper mit zumindest einer Durchlassöffnung zusammenwirkt, wobei der scheibenförmige Ventilkörper eine Außenverzahnung aufweist, in welche zum Drehen des Ventilkörpers ein Ritzel eingreift,
**dadurch gekennzeichnet, dass** das Ritzel (42) und die Außenverzahnung (49) des scheibenförmigen Ventilkörpers (2) über eine Evoloidverzahnung (43; 44) miteinander zusammenwirken.

2. Ventil nach Anspruch 1, **dadurch gekennzeichnet, dass** die Außenverzahnung (49) des scheibenförmigen Ventilkörpers (2) als Zahnsegment ausgebildet ist.

3. Ventil nach Anspruch 2, **dadurch gekennzeichnet, dass** die Außenverzahnung (49) am Ventilkörper (2) in Umfangsrichtung einen Bereich von etwa 100 bis 140 Grad umfasst.

4. Ventil nach Anspruch 2 oder 3, **dadurch gekennzeichnet, dass** die Außenverzahnung (49) umspritzt auf dem Ventilkörper (2) aufgebracht ist.

5. Ventil nach einem der vorhergehenden Ansprüche 1 bis 4, **dadurch gekennzeichnet, dass** der scheibenförmige Dichtkörper (10) über zumindest einen umlaufenden Ring (21; 22) an dem scheibenförmigen Ventilkörper (2) dichtend anliegt.

6. Ventil nach einem der vorhergehenden Ansprüche 1 bis 5, **dadurch gekennzeichnet, dass** das Ventil (1) über eine Gehäusehülse (25) verfügt, an welcher innenwandseitig ein Dichtring (35) anliegt, der über eine Dichtlippe (37) an einer dem Dichtkörper (10) abgewandten Seite (32) des scheibenförmigen Ventilkörpers (2) anliegt.

7. Ventil nach einem der vorhergehenden Ansprüche 1 bis 6, **dadurch gekennzeichnet, dass** der Dichtkörper (10) an einer einem Stellantrieb (40) des Ventils (1) zugewandten Seite (15) zumindest eine statische Formdichtung (17; 18) aufweist.

8. Ventil nach Anspruch 7, **dadurch gekennzeichnet, dass** die zumindest eine Formdichtung (17; 18) als Elastormerdichtung ausgebildet ist.

9. Ventil nach einem der Ansprüche 5 bis 8, **dadurch gekennzeichnet, dass** ein Anpressen des Dichtkörpers (10) an den Ventilkörper (2) über die zumindest eine statische Formdichtung (17; 18) und den Dichtring (35) erfolgt.

## Claims

1. Valve for controlling volume flows, in particular in a heating and/or cooling system of a motor vehicle, with a disk-shaped valve body having at least one control opening which, in order to control the volume flow, interacts with a disk-shaped sealing body having at least one passage opening, wherein the disk-shaped valve body has an external toothing in which a pinion engages in order to rotate the valve body, **characterized in that** the pinion (42) and the external toothing (49) of the disk-shaped valve body (2) interact with each other via an evoloid toothing (43; 44).

2. Valve according to Claim 1, **characterized in that** the external toothing (49) of the disk-shaped valve body (2) is designed as a toothed quadrant.

3. Valve according to Claim 2, **characterized in that** the external toothing (49) on the valve body (2) covers a region of approximately 100 to 140 degrees in the circumferential direction.

4. Valve according to Claim 2 or 3, **characterized in that** the external toothing (49) is provided on the valve body (2) by insert molding.

5. Valve according to one of the preceding Claims 1 to 4, **characterized in that** the disk-shaped sealing body (10) bears in a sealing manner against the disk-shaped valve body (2) via at least one peripheral ring (21; 22).

6. Valve according to one of the preceding Claims 1 to 5, **characterized in that** the valve (1) has a housing sleeve (25), against the inner wall side of which a sealing ring (35) bears, said sealing ring bearing against a side (32) of the disk-shaped valve body (2), which side faces away from the sealing body (10), via a sealing lip (37).

7. Valve according to one of the preceding Claims 1 to 6, **characterized in that** the sealing body (10) has at least one static molded seal (17, 18) on a side (15) facing an actuating drive (40) of the valve (1).

8. Valve according to Claim 7, **characterized in that** the at least one molded seal (17; 18) is designed as an elastomer seal.

9. Valve according to one of Claims 5 to 8, **characterized in that** the sealing body (10) is pressed onto the valve body (2) via the at least one static molded seal (17; 18) and the sealing ring (35).

## Revendications

1. Soupape de commande de débits volumiques, en particulier dans un système de chauffage et/ou de refroidissement d'un véhicule automobile, comprenant un corps de soupape en forme de disque présentant au moins une ouverture de commande qui coopère avec un corps d'étanchéité en forme de disque pour la commande du débit volumique, lequel corps d'étanchéité comprend au moins une ouverture de passage, le corps de soupape en forme de disque comprenant une denture extérieure dans laquelle s'engrène un pignon pour faire tourner le corps de soupape, **caractérisée en ce que** le pignon (42) et la denture extérieure (49) du corps de soupape en forme de disque (2) coopèrent l'un avec l'autre par le biais d'une denture évoloïde (43 ; 44).

2. Soupape selon la revendication 1, **caractérisée en ce que** la denture extérieure (49) du corps de soupape en forme de disque (2) est réalisée sous forme de segment denté.

3. Soupape selon la revendication 2, **caractérisée en ce que** la denture extérieure (49) sur le corps de soupape (2) s'étend sur une région d'approximativement 100 à 140 degrés dans la direction périphérique.

4. Soupape selon la revendication 2 ou 3, **caractérisée en ce que** la denture extérieure (49) est appliquée de manière surmoulée sur le corps de soupape (2).

5. Soupape selon l'une quelconque des revendications précédentes 1 à 4, **caractérisée en ce que** le corps d'étanchéité en forme de disque (10) s'applique de manière étanche contre le corps de soupape en forme de disque (2) par le biais d'au moins une bague périphérique (21 ; 22).

6. Soupape selon l'une quelconque des revendications précédentes 1 à 5, **caractérisée en ce que** la soupape (1) comporte une douille de boîtier (25) contre laquelle s'applique une bague d'étanchéité (35) du côté de la paroi intérieure, laquelle bague d'étanchéité s'applique par le biais d'une lèvre d'étanchéité (37) contre un côté (32), opposé au corps d'étanchéité (10), du corps de soupape en forme de disque (2).

7. Soupape selon l'une quelconque des revendications précédentes 1 à 6, **caractérisée en ce que** le corps d'étanchéité (10) comprend au moins un joint d'étanchéité moulé statique (17 ; 18) sur un côté (15) tourné vers un entraînement d'actionnement (40) de la soupape (1).

8. Soupape selon la revendication 7, **caractérisée en ce que** l'au moins un joint d'étanchéité moulé (17 ; 18) est réalisé sous forme de joint d'étanchéité élastomère.

9. Soupape selon l'une quelconque des revendications 5 à 8, **caractérisée en ce qu'**un pressage du corps d'étanchéité (10) contre le corps de soupape (2) s'effectue par le biais de l'au moins un joint d'étanchéité moulé statique (17 ; 18) et de la bague d'étanchéité (35).
